Europäisches Patentamt

European Patent Office

Office européen des brevets

(19)

(11) Veröffentlichungsnummer: **0 094 373**
**B1**

(12) **EUROPÄISCHE PATENTSCHRIFT**

(45) Veröffentlichungstag der Patentschrift:
06.11.85

(51) Int. Cl.⁴: **B 62 D 55/108**, B 60 G 11/20

(21) Anmeldenummer: 83890071.0

(22) Anmeldetag: 03.05.83

(54) **Federung für Kraftfahrzeuge.**

(30) Priorität: **11.05.82 AT 1835/82**

(43) Veröffentlichungstag der Anmeldung:
**16.11.83 Patentblatt 83/46**

(45) Bekanntmachung des Hinweises auf die Patenterteilung:
**06.11.85 Patentblatt 85/45**

(84) Benannte Vertragsstaaten:
**CH DE FR GB LI**

(56) Entgegenhaltungen:
**DE - A - 1 808 702**
**DE - C - 602 724**
**DE - C - 602 797**
**DE - C - 720 245**
**FR - A - 1 145 368**
**FR - A - 1 300 315**
**FR - A - 1 550 058**
**FR - A - 2 392 840**
**US - A - 2 082 509**
**US - A - 2 606 759**
**US - A - 3 037 762**

**REVUE TECHNIQUE AUTOMOBILE, Band 30, Nr. 347,**
**Juli 1975, Seiten 52-54, Boulogne, Billoncourt, FR.**
**"Suspension de la C 35"**

(73) Patentinhaber: **Steyr-Daimler-Puch Aktiengesellschaft,**
**Kärntnerring 7, A-1010 Wien (AT)**

(72) Erfinder: **Lenhard-Backhaus, Hugo, Dipl.-Ing.,**
**Daffingergasse 6/2/12, A-1030 Wien (AT)**
Erfinder: **Krumpeck, Kurt, Sportplatzstrasse 23,**
**A-7081 Schützen/Geb. (AT)**

## Beschreibung

Die Erfindung bezieht sich auf eine Federung für Kraftfahrzeuge, bei der die ungelenkten Fahrzeugräder einzeln mittels je eines in einer mit dem Fahrzeugrahmen fest verbundenen Lagerhülse gelagerten, gegen die Kraft eines Torsionsstabes schwenkbaren Längslenkers geführt sind, wobei die paarweise parallel hintereinander quer zur Fahrtrichtung angeordneten Torsionsstäbe der Räder einer Achse mit ihren einen Enden in den Naben der Längslenker und mit ihren anderen Enden in Gegenlagern am Fahrzeugrahmen fixiert sind.

Bei einem bekannten Kettenfahrzeug dieser Art (DE-A-1808702) sind je zwei einander an den beiden Fahrzeugseiten gegenüberliegend auf ihren Längslenkern gelagerte Laufräder vorgesehen, wobei jeweils der vom Inneren der Nabe des einen Längslenkers quer durch den Fahrzeugrahmen hindurch zur Lagerhülse des gegenüberliegenden Längslenkers geführte Torsionsstab in einem das Gegenlager bildenden Aufnahmestutzen dieser Lagerhülse drehfest eingesteckt ist. Nachteilig hiebei ist, dass der neben dem Hals der Lagerhülse liegende Aufnahmestutzen in einer gewissen Entfernung vom Mittel dieser Hülse untergebracht werden muss, was zu einem unerwünscht grossen Abstand zwischen den beiden einander zugeordneten Torsionsstäben zwingt. Handelt es sich um mittels Gelenkwellen angetriebene Räder einer Achse eines Radfahrzeuges, so ergeben sich wegen der nicht fluchtenden Gelenkwellen zumindest in den Endbereichen des Federweges zu grosse Gelenkwinkel und damit nachteilige Geräusch- und Verschleisserscheinungen. Ausserdem erfordert der Durchtritt der Lagerhülse mit ihrem Hals und dem Aufnahmebutzen durch die Fahrgestellwandung eine grosse, etwa rechteckige Wandausnehmung, was grosse Bearbeitungsflächen für die Auflage des Flansches der Lagerhülse bzw. am Flansch selbst zur Folge hat. Der Raumbedarf der ganzen Anordnung ist beträchtlich und erhöht das Fahrzeuggewicht.

Aufgabe der Erfindung ist es daher, diese Mängel zu beseitigen und eine Federung der eingangs geschilderten Art zu schaffen, die konstruktiv, insbesondere bei Radfahrzeugen mit über Gelenkwellen angetriebenen Rädern, ohne ungünstigen Gelenkwellen-Beugewinkel unterzubringen ist, einen geringeren Raumbedarf aufweist und einen niedrigen Herstellungsaufwand erfordert.

Die Erfindung löst die gestellte Aufgabe dadurch, dass die Gegenlager auf den zur Fahrzeugmitte weisenden freien Enden der Lagerhülsen zentriert und mittel- oder unmittelbar gegen den Fahrzeugrahmen drehfest abgestützt sind.

Durch die zentrische Anordnung des jeweiligen Gegenlagers eines Torsionsstabes auf dem freien Ende der Lagerhülse, in der die den anderen Torsionsstab des Stabpaares einer Achse aufnehmende Nabe gelagert ist, kann dieses Gegenlager ganz knapp am anderen Torsionsstab angeordnet werden. Die Mittenabstände der beiden Torsionsstäbe können daher klein bleiben, was eine günstige Auslegung der Gelenkwellen der betreffenden Achse ermöglicht. Der Hals der Lagerhülse kann in einer kreisrunden und daher leicht exakt zu bearbeitenden Bohrung im Fahrgestellrahmen passend eingesetzt werden, so dass sich die Schaffung eines grossen aufwendigen Flansches für die Hülsenbefestigung erübrigt. Es bereitet auch keine besonderen Schwierigkeiten, zur besseren und genauen Abstützung des Halses der Lagerhülse einen zweiten rahmenfesten Steg od. dgl. vorzusehen, dessen Sitz für den Hals ohne Schwierigkeiten gemeinsam mit der Bohrung im Fahrgestellrahmen bearbeitet werden kann.

Besonders raumsparend ist es, wenn erfindungsgemäss die Gegenlager mit der Lagerhülse durch eine Kerbverzahnung od. dgl. verbunden sind.

Die Gegenlager können auch mittels Schrauben od. dgl. am Fahrzeugrahmen um die Lagerhülsenachse schwenkverstellbar fixiert sein. Dadurch lassen sich die Gegenlager in eine Schwenkstellung bringen, die Winkelabweichungen der beiden einander zugeordneten Torsionsstäbe gegeneinander berücksichtigt. Zu diesem Zweck könnte man beispielsweise zwischen Stützflächen des Gegenlagers und Gegenflächen am Fahrgestellrahmen eingeschobene Keilstücke mittels Spannschrauben befestigen.

In weiterer Ausbildung der Erfindung besitzen die Gegenlager zur Aufnahme eines an sich bekannten zylindrischen Drehstabhalters für den jeweils dem Gegenlager zugeordneten Torsionsstab eine horizontal in Fahrzeuglängsrichtung angeordnete Zylinderbohrung. Solche Drehstabhalter werden bisher mit vertikaler Achse ausgebildet, wodurch Winkelabweichungen der beiden einander zugeordneten Torsionsstäbe in einer Horizontalebene ohne grössere Biegespannungen ausgeglichen werden können und die Montage vereinfacht wird. Man hat jedoch erkannt, dass bei bestimmten Fahrzeugarten mit grösseren Rahmenverformungen im Einsatz mit Winkelabweichungen der Mitten des Torsionsstabpaares bzw. seiner beiden Lagerhülsen, insbesondere in einer vertikalen Fahrzeugquerebene, zu rechnen ist. Durch die erfindungsgemässe Wahl der Achslage des Drehstabhalters lassen sich diese Winkelabweichungen ausreichend ausgleichen.

In der Zeichnung ist der Erfindungsgegenstand in einem Ausführungsbeispiel dargestellt, und zwar zeigen

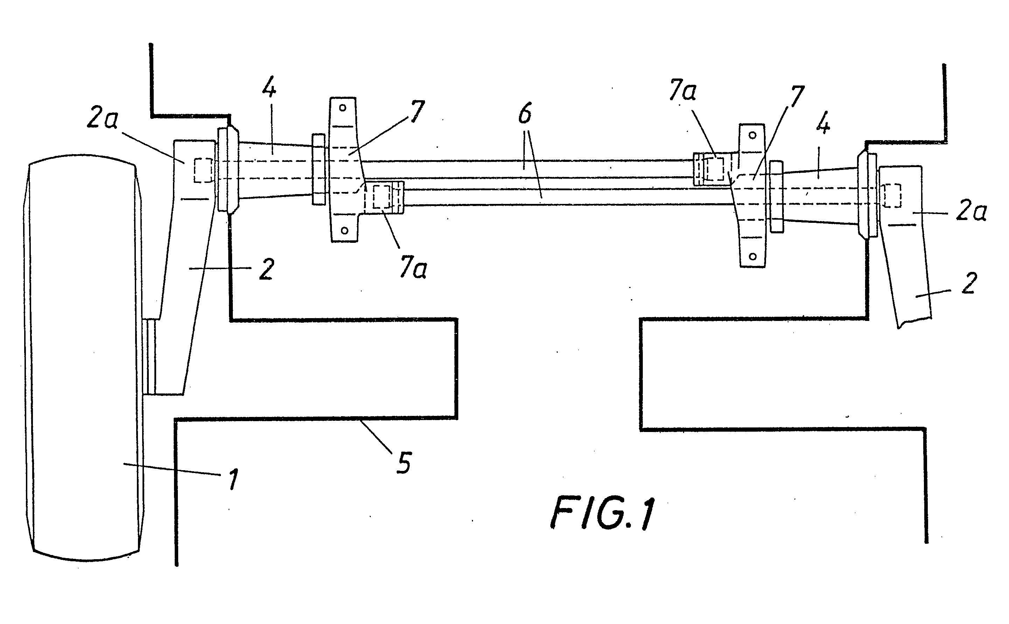

Fig. 1 die Federung der ungelenkten Räder eines kraftfahrzeuges mit wannenförmigen Fahrzeugrahmen in Draufsicht,

Fig. 2 in Ansicht,

Fig. 3 im Querschnitt nach der Linie III-III der Fig. 2, und

Fig. 4 die Lagerhülse eines Fahrzeugrades in grösserem Massstab im Längsschnitt.

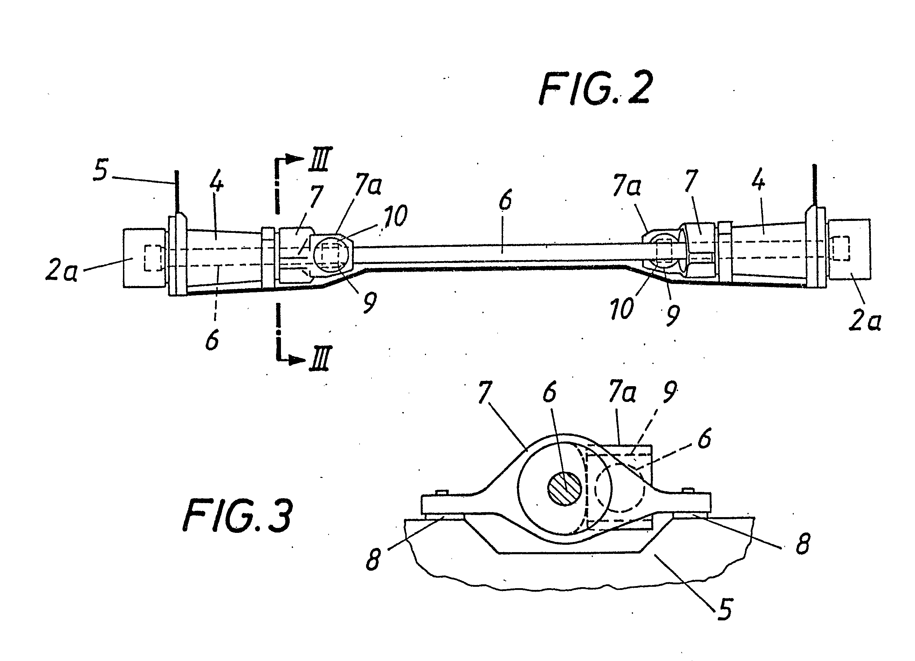

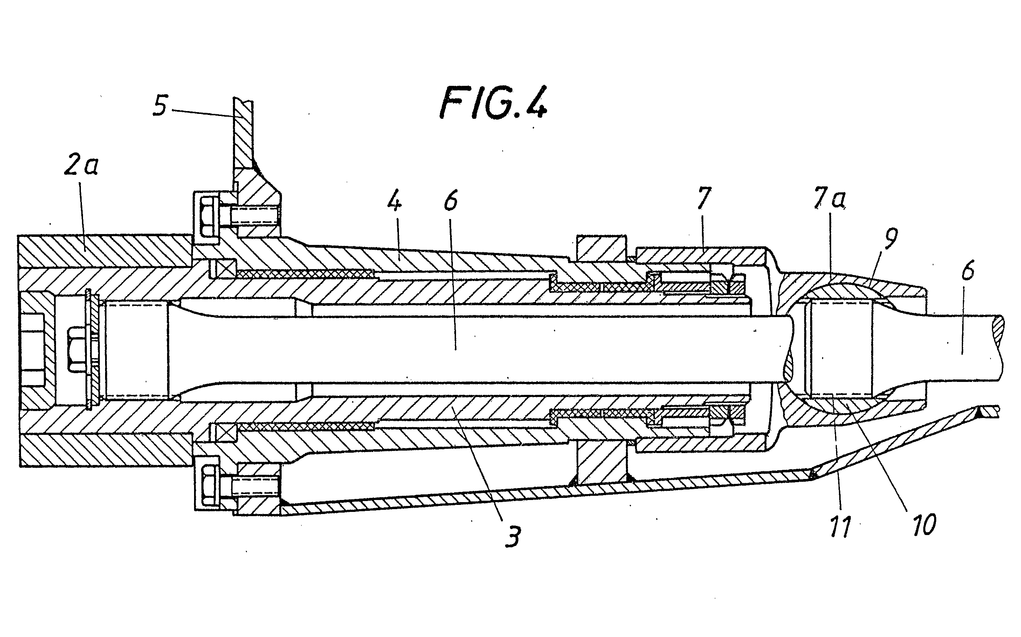

Die ungelenkten Räder 1 eines Kraftfahrzeuges sind einzeln mit Hilfe von Längslenkern 2 geführt, deren Naben 2a auf hohlen Lagerzapfen 3 (Fig. 4) sitzen, die in Lagerhülsen 4 gelagert sind. Die Lagerhülsen 4 sind mit dem wannenförmigen Fahrzeugrahmen 5 fest verbunden. Jedem Längslenker 2 ist ein quer zur Fahrtrichtung liegender Torsionsstab 6 zugeordnet, der jeweils mit seinem einen Ende im Lagerzapfen 3 des betreffenden Lenkers 2 drehfest gehalten und mit seinem anderen Ende in einem Gegenlager 7 fixiert ist. Die Gegenlager 7 sind auf den zur Fahrzeugmitte weisenden freien Enden der Lagerhülsen 4 zentriert und stützen sich am Fahrzeugrahmen, gemäss Fig. 3 am Boden des wannenförmigen Fahrzeugrahmens 5 ab. Dabei können die Gegenlager 7 um die Lagerhülsen 4 schwenkverstellbar und beispielsweise mit Hilfe von gegebenenfalls keilförmigen Zwischenlagen 8 in der gewünschten Drehstellung festhaltbar sein. Die Gegenlager 7 weisen einen Anguss 7a auf, der mit einer horizontal in Fahrtrichtung angeordneten Zylinderbohrung 9 versehen ist. In der Bohrung 9 ist ein zylindrischer Drehstabhalter 10 gelagert, wobei die Torsionsstabenden mit den Drehstabhaltern 10 durch eine Kerbverzahnung 11 verbunden sind. Auch die Gegenlager 7 können auf den Lagerhülsen 4 mittels einer Kerbverzahnung gehalten sein.

**Patentansprüche**

1. Federung für Kraftfahrzeuge, bei der die ungelenkten Fahrzeugräder (1) einzeln mittels je eines in einer mit dem Fahrzeugrahmen (5) fest verbundenen Lagerhülse (4) gelagerten, gegen die Kraft eines Torsionsstabes (6) schwenkbaren Längslenkers (2) geführt sind, wobei die paarweise parallel hintereinander quer zur Fahrtrichtung angeordneten Torsionsstäbe (6) der Räder (1) einer Achse mit ihren einen Enden in den Naben (2a) der Längslenker (2) und mit ihren anderen Enden in Gegenlagern (7) am Fahrzeugrahmen (5) fixiert sind, dadurch gekennzeichnet, dass die Gegenlager (7) auf den zur Fahrzeugmitte weisenden freien Enden der Lagerhülsen (4) zentriert und mittel- oder unmittelbar gegen den Farhrzeugrahmen (5) drehfest abgestützt sind.

2. Federung nach Anspruch 1, dadurch gekennzeichnet, dass die Gegenlager (7) mit den Lagerhülsen (4) durch eine Kerbverzahnung od. dgl. verbunden sind.

3. Federung nach Anspruch 1, dadurch gekennzeichnet, dass die Gegenlager (7) mittels Schrauben od. dgl., am Fahrzeugrahmen (5) um die Lagerhülsenachse schwenkverstellbar fixiert sind.

4. Federung nach einem der Ansprüche 1 bis 3, dadurch gekennzeichnet, dass die Gegenlager (7) zur Aufnahme eines an sich bekannten zylindrischen Drehstabhalters (10) für den jeweils dem Gegenlager zugeordneten Torsionsstab (6) eine horizontal in Fahrzeuglängsrichtung angeordnete Zylinderbohrung (9) besitzen.

**Claims**

1. A suspension for motor vehicles, in which the non-steered vehicle wheels (1) are separately carried by a respective arm (2) which is mounted in a bearing sleeve (4) rigidly connected to the frame (5) of the vehicle, each arm being pivotable against the force of a torsion bar (6), wherein the torsion bars (6) of the wheels (1) of an axle are arranged in pairs, parallel and one behind the other transversely of the direction of travel and have one end fixed in the hubs (2a) of the arms (2) and the other end fixed in counter bearings (7) on the frame (5) of the vehicle, characterized in that the counter bearings (7) are centred on the free ends of the bearing sleeves (4) facing inwardly of the vehicle and are directly or indirectly fixed against rotation relative to the frame (5) of the vehicle.

2. A suspension according to Claim 1, characterized in that the counter bearings (7) are connected to the bearing bushes (4) by a serration or the like.

3. A suspension according to Claim 1, characterized in that the counter bearings (7) are secured to the frame (5) of the vehicle by means of bolts or the like and are pivotable about the axis of the bearing sleeves.

4. A suspension according to any one of Claims 1 to 3, characterized in that the counter bearings (7) comprise a cylinder bore (9) arranged horizontally in the longitudinal direction of the vehicle for receiving a cylindrical torsion bar holder (10) known *per se* for the torsion bar (6) associated with the respective counter bearing.

**Revendications**

1. Suspension pour véhicules à moteur dans laquelle les roues indépendantes (1) du véhicule sont guidées individuellement chacune au moyen d'un bras oscillant longitudinal (2) monté pivotant contre la force d'une barre de torsion (6) à l'aide d'un palier (4) fixé solidement au châssis (5) du véhicule, les barres de torsion (6) des roues (1) d'un essieu étant disposées par paires parallèlement l'une derrière l'autre en sens transversal au sens de la marche du véhicule et fixées par l'une de leurs extrémités au moyeu (2a) d'un bras oscillant longitudinal (2) et par leur autre extrémité au châssis (5) dans des paliers antagonistes (7), caractérisée en ce que les paliers antagonistes (7) sont centrés sur les parties extrêmes libres des paliers (4) dirigées vers le milieu du véhicule, et sont appuyés directement ou indirectement sur le châssis (5) du véhicule pour être calés en rotation.

2. Suspension selon la revendication 1, caractérisée en ce que les paliers antagonistes (7) sont réunis aux paliers (4) par l'intermédiaire de cannelures ou d'un moyen analogue.

3. Suspension selon la revendication 1, caractérisée en ce que les paliers antagonistes (7) sont fixés à l'aide de vis ou de moyens analogues au châssis (5) du véhicule pour être réglables en position par rotation autour des axes des paliers.

4. Suspension selon l'une des revendications 1 à 3, caractérisée en ce que les paliers antagonistes (7) ont un trou cylindrique (9) disposé horizontalement dans le sens longitudinal du véhicule pour recevoir un porte-barre de torsion (10) cylindrique connu en soi de la barre de torsion (6) correspondante au palier antagoniste considéré.

FIG.1

# FIG.2

# FIG.3

0 094 373

# FIG.4

0 094 373